# EUROPÄISCHE PATENTANMELDUNG

(11) **EP 1 528 180 A1**
(43) Veröffentlichungstag der Anmeldung: **04.05.2005**
(21) Anmeldenummer: 04024141.6
(22) Anmeldetag: 09.10.2004
(51) Int. Cl.: E04F 11/18, F16B 7/04, F16B 7/18, F16B 11/00

(54) **Treppenhandlauf**

(30) Priorität: 30.10.2003 DE 20316786 U
(71) Anmelder: NEUCON Maschinen- und Bausysteme G.m.b.H. u. Co. Kommanditgesellschaft, D-74076 Heilbronn (DE)
(72) Erfinder:
(74) Vertreter: Clemens, Gerhard, Dr.-Ing.

(57) **Zusammenfassung**

Ein räumlich verlaufender Treppenhandlauf (40) mit mehreren geraden unter einem jeweiligen Raumwinkel (α1,α2,α3) aneinanderstoßenden Handlaufabschnitten, die eine konvex gekrümmte, insbesondere kreisförmige Umfangskontur aufweisen, wobei zumindest ein erster Handlaufabschnitt (42) mit einer ersten Längsachse vorhanden ist und zumindest ein an den ersten Handlaufabschnitt (42) in dem entsprechenden Raumwinkel (α2) angeschlossener zweiter Handlaufabschnitt (44) mit einer zweiten Längsachse vorhanden ist, und mit Mitteln zum Verbinden der Handlaufabschnitte (42, 44), ist dadurch gekennzeichnet, dass die Stirnendseiten aneinanderstoßender Handlaufabschnitte (42, 44) in ihrer jeweiligen räumlichen Lage direkt ohne Einsatz zusätzlicher Anschlusseinheiten, das heißt einteilig, kongruent aneinanderliegend miteinander verbunden sind, sodass sich ein räumlich durchgehender Treppenhandlauf ohne Versätze oder Überstände im Anschlussbereich der Handlaufabschnitte (42, 44) ergibt, wobei die jeweils gegenüberliegenden Stirnendflächen zweier Handlaufabschnitte (42, 44) eine ebene, quer zur ersten beziehungsweise zweiten Längsachse des ersten beziehungsweise zweiten Handlaufabschnitts (42, 44) vorhandene Schnittflächengeometrie aufweisen, derart, dass im verbundenen Zustand die Stirnendflächen beider Handlaufabschnitte (42, 44) unter Beibehaltung des jeweiligen Raumwinkels (α) flächig aufeinanderliegen, oder wobei zumindest eine Stirnendfläche eines der beiden Handlaufabschnitte eine konkav gekrümmte Schnittflächengeometrie aufweist, derart, dass die Stirnendfläche des einen Handlaufabschnitts bereichsweise an der konvexen Außenkontur des anderen Handlaufabschnitts unter Beibehaltung des jeweiligen Raumwinkels (α) im verbundenen Zustand anliegt.

## Beschreibung

### TECHNISCHES GEBIET

Die vorliegende Erfindung betrifft einen räumlich verlaufenden Treppenhandlauf mit mehreren geraden unter einem jeweiligen Raumwinkel aneinanderstoßenden Handlaufabschnitten, die eine konvex gekrümmte, insbesondere kreisförmige Umfangskontur aufweisen, wobei zumindest ein erster Handlaufabschnitt mit einer ersten Längsachse vorhanden ist und zumindest ein an den ersten Handlaufabschnitt in dem entsprechenden Raumwinkel angeschlossener zweiter Handlaufabschnitt mit einer zweiten Längsachse vorhanden ist und mit Mitteln zum Verbinden der Handlaufabschnitte.

Treppen benötigen Handläufe für die Sicherheit beim Begehen. Da Treppen mit unterschiedlichen Steigungen und unterschiedlichen Wendelungen ausgeführt werden, müssen die Handläufe, um sich den jeweiligen Erfordernissen anzupassen, entsprechend gestaltet werden.

### STAND DER TECHNIK

Aus der herkömmlichen Treppenfertigung sind im Treppenauge und am unteren und oberen Ende des jeweiligen Laufes senkrecht aufragende Handlaufstützen bekannt. Diese wurden zur Erzielung eines glatt durchgehenden Geländers mit im Profil passend angeschlossenen Handlaufabschnitten versehen, die entsprechend saubere handwerkliche Arbeit bedingen, welche mit wirtschaftlich vertretbarem Aufwand für Montagegeländer heute nicht mehr zur Verfügung steht.

Des Weiteren sind Treppen bekannt, bei denen die Handlaufabschnitte im Anschlussbereich an die Handlaufstützen einen Höhenversatz aufweisen. Bei Spindeltreppen werden Treppenhandläufe mit geradlinig verlaufenden Handlaufabschnitten eingesetzt, die nach jeder Stufe einen Höhenversatz aufweisen. Des Weiteren ist bei Spindeltreppen bekannt, einen durchgehend gekrümmten Handlauf einzusetzen, dessen Herstellung jedoch extrem teuer und aufwändig ist.

In der EP 0 264 085 B1 ist ein Treppenhandlauf beschrieben, bei dem als Verbindungsmittel im Stoßbereich Eckstücke vorgesehen sind, die zwei im Winkel zueinanderstehende Anschlussseitenflächen in vertiefter Anordnung aufweisen. Der Anschluss erfolgt über Befestigungsmittel wie Schrauben, Dübelverankerungen, Spannelemente oder dergleichen. Hierbei wird davon ausgegangen, dass bei einer schnellen Anpass- und Montagearbeit von durchschnittlichen Handwerkern oder Monteuren stets kleine Winkelungenauigkeiten beim stirnseitigen Abtrennen der Handlaufabschnitte aufgrund Maßanpassungen auftreten und die Schnittkante zum Teil kleinere oder größere Ausmessungen aufweisen. Durch den Anschluss der Handlaufabschnitte in den Vertiefungsflächen werden diese Unsauberkeiten optisch verdeckt.

In der EP 0 688 920 B1 ist eine Verbindungseinrichtung für einen Treppenhandlauf beschrieben, die aus zwei zunächst drehbar aufeinanderliegenden Halbkugelelementen besteht, wobei die Schnittachse der Halbkugelelemente im Wesentlichen in einem Winkel von 45° (Altgrad) zur Längsachse der angeschlossenen Handlaufabschnitte angeordnet ist. Durch eine derartige separate Verbindereinrichtung können unterschiedliche Raumwinkel für die anzuschließenden Handlaufabschnitte eingestellt werden. Darüber hinaus ist es möglich, Montageungenauigkeiten vor Ort auszugleichen.

### DARSTELLUNG DER ERFINDUNG

Ausgehend von dem genannten Stand der Technik liegt der vorliegenden Erfindung die Aufgabe beziehungsweise das technische Problem zugrunde, einen Treppenhandlauf der eingangs genannten Art anzugeben, der im Rahmen einer Großserienproduktion wirtschaftlich vorgefertigt werden kann, eine einfache Montage gewährleistet, im Wesentlichen kongruente Übergänge im Anschlussbereich der Handlaufabschnitte ermöglicht, auf das Vorsehen von zusätzlichen Anschlusseinheiten vollständig verzichtet und ein ansprechendes äußeres Aussehen aufweist bei gleichzeitig günstigem Griffverhalten.

Der erfindungsgemäße Treppenhandlauf ist durch die Merkmale des unabhängigen Anspruchs 1 gegeben. Vorteilhafte Ausgestaltungen und Weiterbildungen sind Gegenstand der von dem unabhängigen Anspruch 1 direkt oder indirekt abhängigen Ansprüche.

Der erfindungsgemäße Treppenhandlauf zeichnet sich demgemäß dadurch aus, dass die Stirnendseiten aneinanderstoßender Handlaufabschnitte in ihrer jeweiligen räumlichen Lage direkt ohne Einsatz zusätzlicher Anschlusseinheiten, das heißt einteilig, kongruent aneinanderliegend miteinander verbunden sind, sodass sich ein räumlich durchgehender Treppenhandlauf ohne Versätze oder Überstände im Anschlussbereich der Handlaufabschnitte ergibt, wobei die jeweils gegenüberliegenden Stirnendflächen zweier Handlaufabschnitte eine ebene, quer zur ersten beziehungsweise zweiten Längsachse des ersten beziehungsweise zweiten Handlaufabschnitts vorhandene Schnittflächengeometrie aufweisen, derart, dass im verbundenen Zustand die Stirnendflächen beider Handlaufabschnitte unter Beibehaltung des jeweiligen Raumwinkels flächig aufeinanderliegen, oder wobei zumindest eine Stirnendfläche eines der beiden Handlaufabschnitte eine konkav gekrümmte Schnittflächengeometrie aufweist, derart, dass die Stirnendfläche des einen Handlaufabschnitts bereichsweise an der konvexen Außenkontur des anderen Handlaufabschnitts unter Beibehaltung des jeweiligen Raumwinkels im verbundenen Zustand anliegt.

Bei dem erfindungsgemäßen Treppenhandlauf wird zur Verbindung auf den Einsatz von zusätzlichen Verbindungseinheiten vollständig verzichtet. Die anzuschließenden Handlaufabschnittsstirnseiten werden allein durch die Schnittführung zu einem kongruenten Anschlussbild geformt.

Eine besonders bevorzugte erste Ausführungsvariante des erfindungsgemäßen Handlaufs zeichnet sich dadurch aus, dass die Schnittflächengeometrie des Stirnendes des ersten und zweiten Handlaufabschnitts durch eine ebene Schnittführung in einer Ebene hergestellt ist, die senkrecht auf einer durch die erste und zweite Längsachse gebildeten Ebene steht und den jeweiligen Raumwinkel halbiert, sodass im verbundenen Zustand kongruente Schnittflächengeometrien aneinanderliegen.

Durch das vor Ort auf der Baustelle vorzunehmende Aufmaß der Treppe ist die Geometrie der räumlichen Anordnung der Handlaufabschnitte exakt definiert. Diese Daten werden ausgewertet und einer computergesteuerten Fertigungsanlage (zum Beispiel CNC-Vorrichtung mit 5-Achsen-Bearbeitung) zugeführt, die daraus die jeweils den geometrischen Raumbedingungen angepasste Schnittführung der Endflächen der Treppenhandlaufabschnitte vornimmt. Die Schnittflächen, die dadurch erzeugt werden, sind bei Rundhandläufen in der Regel Ellipsen, die im Verbindungszustand kongruent aufeinanderliegen. Daher ergibt sich auch hier ein fließender Übergang im Anschlussbereich der Handlaufabschnitte. Spezielle separate Anschlusseinheiten entfallen vollständig. Der Handlauf kann problemlos bei jeder Art von Treppe, beispielsweise bei L- oder U-förmig oder polygonal verlaufenden Treppen und auch bei Spindeltreppen, eingesetzt werden.

Eine besonders vorteilhafte zweite Variante einer erfindungsgemäßen Weiterbildung zeichnet sich dadurch aus, dass die Schnittflächengeometrie des Stirnendes des ersten und zweiten Handlaufabschnitts durch eine Schnittführung im Bereich zwischen 40° und 50° (Altgrad) zur Längsachse des jeweiligen Handlaufabschnitts hergestellt ist und die durch die Schnittführung erzeugte zunächst elliptische Schnittfläche durch Abrundungen im Bereich der gegenüberliegenden langen Ellipsenseite zu einer kreisförmigen Schnittfläche geformt ist, sodass im verbundenen Zustand kongruente kreisförmige Schnittflächengeometrien der Stirnseiten aneinanderliegen.

Dadurch dass kreisförmige Schnittflächen erzeugt werden, die im verbundenen Zustand aufeinanderliegen, ist es möglich, unterschiedliche Winkelstellungen umzusetzen, ohne dass störende Kanten im Anschlussbereich entstehen. Die vorhandenen Abrundungen ermöglichen einen relativ glatten Übergang der Handlaufabschnitte im Anschlussbereich.

Eine besonders vorteilhafte dritte Ausführungsvariante des erfindungsgemäßen Treppenhandlaufs zeichnet sich dadurch aus, dass die konkav gekrümmte Schnittflächengeometrie der Stirnseite des ersten Handlaufabschnitts durch eine parallel zur Längsachse des zweiten Handlaufabschnitts geführte Ausnehmung mit Teilkreisquerschnitt gebildet wird, die im verbundenen Zustand flächig an der gegenüberliegenden zweiten Flächengeometrie, das heißt der Außenkontur, des zweiten Handlaufabschnitts anliegt. Dabei zeichnet sich eine vorteilhafte Ausgestaltung dadurch aus, dass die Stirnseiten des zweiten Handlaufabschnitts eine konvexe parallel zur Längsachse des ersten Handlaufabschnitts geführte Rundungskontur mit Teilkreisquerschnitt besitzt, die der teilweisen Außenkontur des ersten Handlaufabschnitts entspricht, sodass im Verbindungszustand ein nahtloser Übergang zwischen der Außenkontur des ersten Handlaufabschnitts und der Rundungskontur des zweiten Handlaufabschnitts vorhanden ist.

Auch bei dieser Ausbildungsvariante wird ein glatter Übergang der Handlaufabschnitte im Anschlussbereich ermöglicht. Insbesondere bei Rundhandläufen lässt sich dadurch ein optisch ansprechendes Anschlussbild umsetzen. Auch bei dieser Lösung entstehen keine störenden Kanten im Anschlussbereich der beiden Handlaufabschnitte.

Eine besonders bevorzugte Weiterbildung, die eine sehr einfache Montage ermöglicht und gleichzeitig eine dauerhaft zuverlässige Funktion gewährleistet, zeichnet sich dadurch aus, dass der erste und/oder der zweite Handlaufabschnitt eine von außen zugängliche Ausnehmung, insbesondere Stufenausnehmung besitzt, die bis zur Schnittflächengeometrie durchgeht und in der ein Verbindungsmittel, insbesondere Schraube, zum Verbinden mit dem jeweiligen anzuschließenden Handlaufabschnitt angeordnet ist.

Besonders vorteilhaft ist es, gemäß einer weiteren Ausgestaltung in Verlängerung der Ausnehmung im anzuschließenden Handlaufabschnitt eine Sacklochbohrung vorzusehen, in der bevorzugt eine Muffe angeordnet ist. Dadurch gestaltet sich der Anschluss äußerst einfache und garantiert eine hohe Festigkeit.

Die durch die Ausnehmung beziehungsweise Sacklochausnehmung auftretende Querschnittsschwächung wird gemäß einer besonders bevorzugten Ausgestaltung dadurch minimiert, dass die durchgehende Ausnehmung beziehungsweise Sacklochausnehmung im Wesentlichen senkrecht und mittig zur jeweiligen Schnittflächengeometrie angeordnet ist. Bezüglich einer besonders hohen Auszugsfestigkeit ist es vorteilhaft, die Ausnehmung beziehungsweise Sacklochausnehmung in Richtung der Längsachse des anzuschließenden Handlaufabschnittes anzuordnen.

Gemäß einer besonders vorteilhaften Ausgestaltung wird an beiden Schnittflächengeometrien eine Formschlusseinheit eingesetzt, die im verbundenen Zustand eine Verdrehung der Handlaufabschnitte verhindert. Diese Formschlusseinheit kann entweder eingepresst oder in einer jeweiligen Nut in der Schnittflächengeometrie verlaufend vorhanden sein. Durch die Formschlusseinheit wird eine Zentrierung und eine Verdrehsicherung gewährleistet und insgesamt die Festigkeit im Anschlussbereich erhöht. Die Zentrierung ist insbesondere hinsichtlich einer einfachen Montage vorteilhaft.

Die Formschlusseinheit kann bevorzugt aus hochfestem Material, insbesondere Metall, bestehen.

In einer alternativen Ausgestaltung ist zwischen den beiden Schnittflächengeometrien im verbundenen Zustand ein Spalt vorhanden, wobei die Formschlusseinheit auch als Distanzeinheit eingesetzt wird. Dabei kann die Formschlusseinheit elastische Eigenschaften besitzen, um eventuell auftretende Toleranzen ausgleichen zu können.

Eine besonders vorteilhafte Ausgestaltung zeichnet sich dadurch aus, dass die Formschlusseinheit als polygonale oder runde Ringeinheit, insbesondere quadratische Ringeinheit, ausgebildet ist.

Bei den üblichen Handlaufabmessungen hat es sich als vorteilhaft herausgestellt, eine Formschlusseinheit mit einer Ringhöhe im Bereich von 3 von 5 mm (Millimeter) einzusetzen.

Eine alternative Weiterbildung zeichnet sich dadurch aus, dass die Formschlusseinheit zumindest ein Vorsprungelement aufweist, das in einer entsprechenden Ausnehmung formschlüssig angeordnet ist.

Eine alternative Ausgestaltung der Verbindung der beiden Handlaufabschnitte ist dadurch gekennzeichnet, dass die Verbindung beider Handlaufabschnitte über einen Gelenkdübel erfolgt, dessen Gelenkpunkt im Schnittpunkt der Längsachsen beider Handlaufabschnitte angeordnet ist, der Gelenkdübel mit dem zweiten Handlaufabschnitt über eine in einer Sacklochausnehmung angeordnete Muffe verbunden ist, der Gelenkdübel weiterhin in einer in der Längsachse des ersten Handlaufabschnitts verlaufenden Längsausnehmung angeordnet ist, wobei die Längsausnehmung von einer Querausnehmung durchbrochen wird und in der Querausnehmung eine betätigbare Spanneinheit, insbesondere Exzentereinheit, angeordnet ist, mittels derer der Gelenkdübel verspannbar ist, wodurch die Verbindung der beiden Handlaufabschnitte herstellbar ist. Ein derartiger Gelenkdübel wird bisher im Möbelbau eingesetzt.

Wie bereits schon angesprochen ermöglichen die erfinderischen Ausführungsvarianten optisch besonders ansprechende Verbindungsmöglichkeiten für Rundprofile als Handlaufabschnitte aus Holz (Vollquerschnitt) oder aus Metall (Rohrquerschnitt).

Eine besonders vorteilhafte Ausgestaltung, die äußerst wirtschaftlich vorgefertigt und montiert werden kann, zeichnet sich dadurch aus, dass an beiden Stirnendbereichen der aneinanderstoßenden Handlaufabschnitte gegenüberliegende, fluchtende Ausnehmungen vorhanden sind, wobei in beiden Ausnehmungen ein Dübel eingesetzt ist. Der Dübel kann dabei bevorzugt Querrillen aufweisen und mittels eines Klebers oder Leim befestigt sein.

Um zusätzlich eine Verdrehsicherung zu gewährleisten, können gemäß einer bevorzugten Ausgestaltung zwei beabstandet zueinander angeordnete Dübel vorhanden sein, die in entsprechenden Ausnehmungen auf beiden Stirnseiten in den Schnittflächengeometrien der Handlaufabschnitte angeordnet sind.

Eine alternative Ausgestaltung betreffend eine Hohlprofillösung zeichnet sich dadurch aus, dass die Handlaufabschnitte als Rohrprofile, insbesondere aus Metall, ausgebildet sind und im Anschlussstirnbereich zweier Handlaufabschnitte im Rohrinneren eine Verbindereinrichtung mit folgendem Aufbau angeordnet ist: eine Gelenkeinheit mit zwei über ein Gelenk verbundenen Gelenkstäben, wobei das Gelenk im verbundenen Zustand der Handlaufabschnitte im Schnittpunkt der beiden Längsachsen und die Gelenkstäbe in Richtung der Längsachsen angeordnet sind, in beiden Handlaufabschnitten im Rohrinneren Lagereinheiten vorhanden sind, die im Rohrinneren festlegbar sind und an denen jeweils ein Gelenkstab mittels jeweils einer von außen zugänglichen Spanneinheit verspannbar ist.

Eine weitere alternative Ausgestaltung betreffend Hohlprofile zeichnet sich dadurch aus, dass die Handlaufabschnitte als Rohrprofile, insbesondere aus Metall, ausgebildet sind und im Anschlussbereich zweier Handlaufabschnitte im Rohrinneren eine Verbindereinrichtung mit folgendem Aufbau angeordnet ist: in beiden Handlaufabschnitten sind im Inneren Abdichteinheiten vorhanden, die beabstandet zu der jeweiligen Schnittflächengeometrie angeordnet sind, und einem von außen in den Raum zwischen beiden Abdichteinheiten eingebrachten Fließmedium, das den Raum ausfüllt und unter atmosphärischen Bedingungen zu einem festen Verbindungskörper erstarrt ist.

Erfindungsgemäß ist es somit möglich, auch Hohlprofile unter Beachtung der räumlichen Schnittgeometrie als Handlaufabschnitte einzusetzen, die ein durchgehendes Handlaufbild ergeben, ohne dass Versätze oder Überstände im räumlichen Verlauf des Handlaufs vorhanden sind.

Der Außendurchmesser der Handlaufabschnitte liegt bevorzugt im Bereich von 4 bis 8 cm (Zentimeter).

In einer besonders vorteilhaften Ausgestaltung, die hinsichtlich der Montage einer Treppe als ganzes besonders wirtschaftlich ist, zeichnet sich dadurch aus, dass die Handlaufabschnitte unterseitige Ausnehmungen zum Anschluss von Geländerstäben aufweisen. Dabei werden die Geländerstäbe bevorzugt in einfacher Art und Weise lediglich von unten her in die Ausnehmungen eingesteckt.

Eine erfindungsgemäße Treppe mit Trittstufen, mit einem Geländer mit Geländerstützen und einem Treppenhandlauf, wobei die Geländerstäbe an den Trittstufen oder einer Wange und an den Treppenhandlauf angeschlossen sind, zeichnet sich dadurch aus, dass ein Treppenhandlauf eingesetzt wird, der die oben beschriebene Schnittflächengeometrie und Verbindungstechnik aufweist, das heißt bei dem auf separate Anschlusseinheiten verzichtet wird und die Schnittprofile der Stirnseiten der Handlaufabschnitte im Anschlussbereich direkt aufeinanderliegen und sich somit ein durchgehender Handlauf ohne Versätze oder Überstände ergibt.

Weitere Ausführungsformen und Vorteile der Erfindung ergeben sich durch die in den Ansprüchen ferner aufgeführten Merkmale sowie durch die nachstehend angegebenen Ausführungsbeispiele. Die Merkmale der Ansprüche können in beliebiger Weise miteinander kombiniert werden, insoweit sie sich nicht offensichtlich gegenseitig ausschließen.

### KURZE BESCHREIBUNG DER ZEICHNUNG

Die Erfindung sowie vorteilhafte Ausführungsformen und Weiterbildungen derselben werden im Folgenden anhand der in der Zeichnung dargestellten Beispiele näher beschrieben und erläutert. Die der Beschreibung und der Zeichnung zu entnehmenden Merkmale können einzeln für sich oder zu mehreren in beliebiger Kombination erfindungsgemäß angewandt werden. Es zeigen:
- Fig. 1: schematische ausschnittsweise Darstellung eines räumlich verlaufenden Handlaufes mit geradlinigen Handlaufabschnitten in einem dreidimensionalen Koordinatensystem mit zugehörigen geometrischen Größen,
- Fig. 2: schematische Detailseitenansicht eines räumlich verlaufenden Treppenhandlaufs im Anschlussbereich zweier Handlaufabschnitte mit einer ebenen Schnittflächengeometrie, wobei die Schnittflächengeometrie den vorhandenen Raumwinkel α halbiert und senkrecht auf der von den beiden Längsachsen der Handlaufabschnitte gebildeten Ebene steht, mit einer Schraube als Verbindungsmittel,
- Fig. 3: schematische Detailseitenansicht eines räumlich verlaufenden Treppenhandlaufs im Anschlussbereich zweier Handlaufabschnitte mit einer ebenen Schnittflächengeometrie, wobei die Schnittflächengeometrie den vorhandenen Raumwinkel α halbiert und senkrecht auf der von den beiden Längsachsen der Handlaufabschnitte gebildeten Ebene steht, jedoch mit zusätzlicher Darstellung der jeweiligen Ebenen zur Berechnung der Schnittführung,
- Fig. 4,: 5 schematisierte Detailseitenansicht des Treppenhandlaufs gemäß Fig. 2, jedoch mit einem (Fig. 4) und zwei (Fig. 5) Dübel/n als Verbindungsmittel,
- Fig. 6: schematische Detaildraufsicht auf den Anschlussbereich zweier Handlaufabschnitte gemäß der konstruktiven Ausbildung in Fig. 3 mit einem alternativen Verbindungsmittel, das als Gelenkdübel ausgebildet ist, wobei im Bereich der Schnittfläche eine Formschlusseinheit vorhanden ist,
- Fig. 7: schematische Detaildraufsicht auf den Anschlussbereich zweier Handlaufabschnitte gemäß der konstruktiven Ausbildung in Fig. 4 mit zusätzlich dargestelltem Verbindungsmittel, das als Gelenkdübel ausgebildet ist, wobei im Bereich der Schnittfläche eine Formschlusseinheit vorhanden ist, die zwischen den beiden Schnittflächengeometrien der Handlaufabschnitte einen Spalt erzeugt,
- Fig. 8: schematische Detailseitenansicht eines räumlich verlaufenden Treppenhandlaufs im Anschlussbereich zweier Handlaufabschnitte gemäß der Schnittflächengeometrie nach Fig. 2 mit einer Formschlusseinheit, die ein flächiges Vorsprungelement und eine entsprechende Ausnehmung aufweist,
- Fig. 9: schematische Perspektivdarstellung einer Ansicht des in Fig. 8 linken Handlaufabschnitts mit flächigem Vorsprungelement,
- Fig. 10: schematische Detailseitenansicht eines räumlich verlaufenden Treppenhandlaufs im Anschlussbereich zweier Handlaufabschnitte gemäß der Schnittflächengeometrie nach Fig. 2 mit einer Formschlusseinheit, die zwei stiftartige Vorsprungelemente mit entsprechenden Ausnehmungen aufweist,
- Fig. 11: schematische Perspektivdarstellung einer Ansicht des in Fig. 10 linken Handlaufabschnitts mit stiftartigen Vorsprungelementen,
- Fig. 12: schematische Perspektivdarstellung der Ansicht eines Handlaufabschnitts mit einem plättchenförmigen einzusetzenden Vorsprungelement und entsprechend schlitzförmiger Ausnehmung,
- Fig. 13: schematische Detailseitenansicht eines räumlich verlaufenden Treppenhandlaufs im Anschlussbereich zweier Handlaufabschnitte mit einer ebenen Schnittflächengeometrie gemäß Schnittführung nach Fig. 2, wobei die Handlaufabschnitte als Rohrprofile ausgebildet sind und die Handlaufabschnitte mittels einer als Gelenkeinheit ausgebildeten Verbindereinrichtung verbunden sind,
- Fig. 14: schematische Detailseitenansicht eines räumlich verlaufenden Treppenhandlaufs im Anschlussbereich zweier Handlaufabschnitte mit einer ebenen Schnittflächengeometrie gemäß Schnittführung nach Fig. 2, wobei die Rohrprofile mit einem ausgeschäumten Körper als Verbindungseinrichtung miteinander verbunden sind,
- Fig. 15: schematische Perspektivdarstellung eines Treppenhandlaufs im Anschlussbereich zweier Handlaufabschnitte, wobei ein Handlaufabschnitt eine Schnittflächengeometrie aufweist, die teilweise der Außenkontur des anderen Handlaufabschnittes entspricht und der andere Handlaufabschnitt stirnseitig eine teilweise der Außenkontur des einen Handlaufabschnittes entsprechende Außenkontur aufweist,
- Fig. 16: schematische Draufsicht auf die Anordnung gemäß Fig. 15,
- Fig. 17: schematischer Schnitt durch die Anordnung gemäß Fig. 16 entlang Schnittführung B-B und
- Fig. 18: schematische Detailperspektive der Anordnung gemäß Fig. 15 in Explosionsdarstellung,
- Fig. 19: schematische Detaildraufsicht auf einen Treppenhandlauf im Anschlussbereich seiner Handlaufabschnitte, die in ihrem Stirnendbereich eine ebene Schnittflächengeometrie aufweisen, wobei durch Abrundungen kreisförmige Schnittflächen erzeugt werden, und
- Fig. 20: schematischer Schnitt durch die Schnittflächengeometrie gemäß Fig. 1 entlang Schnittführung A-A.

### WEGE ZUM AUSFÜHREN DER ERFINDUNG

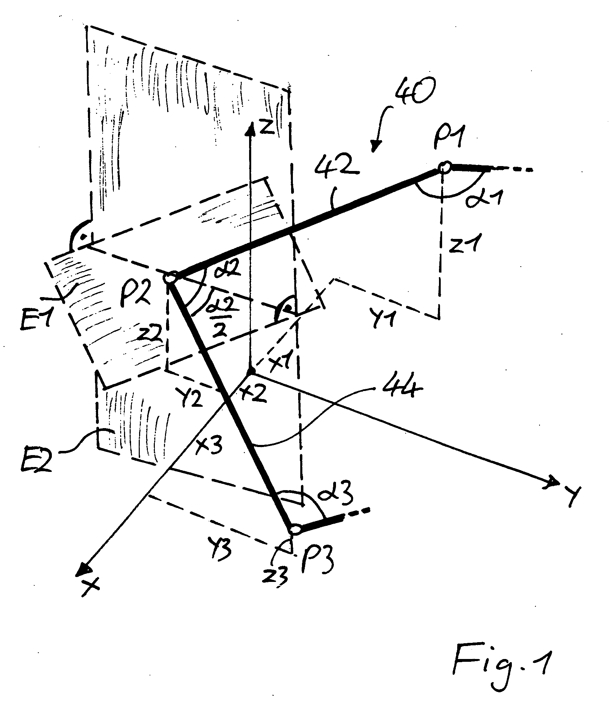

In Figur 1 ist ein rechtwinkliges Koordinatensystem mit den Koordinaten x, y, z dargestellt. Des Weiteren ist ein räumlich verlaufender Treppenhandlauf 40 mit einzelnen geradlinig verlaufenden, aneinanderstoßenden Handlaufabschnitten 40, 42 dargestellt. Die Endpunkte der beiden Handlaufabschnitte 42, 44 sind mit P1 (Koordinaten x1, y1, z1), P2 (Koordinaten x2, y2, z2) - gemeinsamer Anschlusspunkt - und P3 (Koordinaten x3, y3, z3) angegeben. Aufgrund der festgelegten Koordinaten kann eine Ebene E1 definiert und berechnet werden, in der die Längsachsen der Handlaufabschnitte 42, 44 liegen. Des Weiteren kann der zwischen beiden Handlaufabschnitten 42, 44 vorhandene Raumwinkel α2 berechnet werden. In Figur 1 ist weiterhin eine Schnittebene E2 dargestellt, die senkrecht auf der Ebene E1 steht, durch den Punkt P2 verläuft und den Raumwinkel α2 halbiert. In dieser Schnittebene werden die Stirnendbereiche der im Punkt P2 ankommenden Handlaufabschnitte 42, 44 geschnitten und anschließend zusammengefügt, was im Nachfolgenden beschrieben wird.

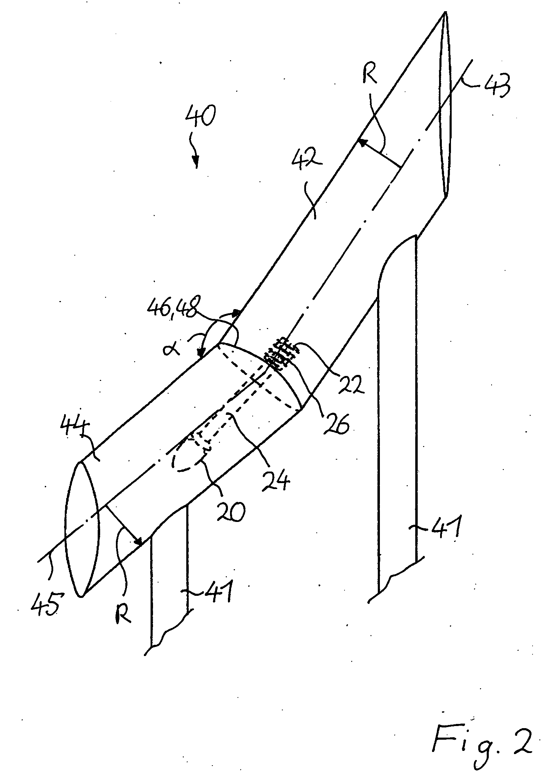

In Figur 2 ist ein Ausschnitt einer ersten Ausführungsvariante eines Treppenhandlaufes 40 im Verbindungsbereich eines ersten Handlaufabschnittes 42 mit einem zweiten Handlaufabschnitt 44 dargestellt. Beide Handlaufabschnitte 42, 44 sind als Rundholzquerschnitte mit dem Radius R ausgebildet und besitzen eine erste Längsachse 43 beziehungsweise zweite Längsachse 45.

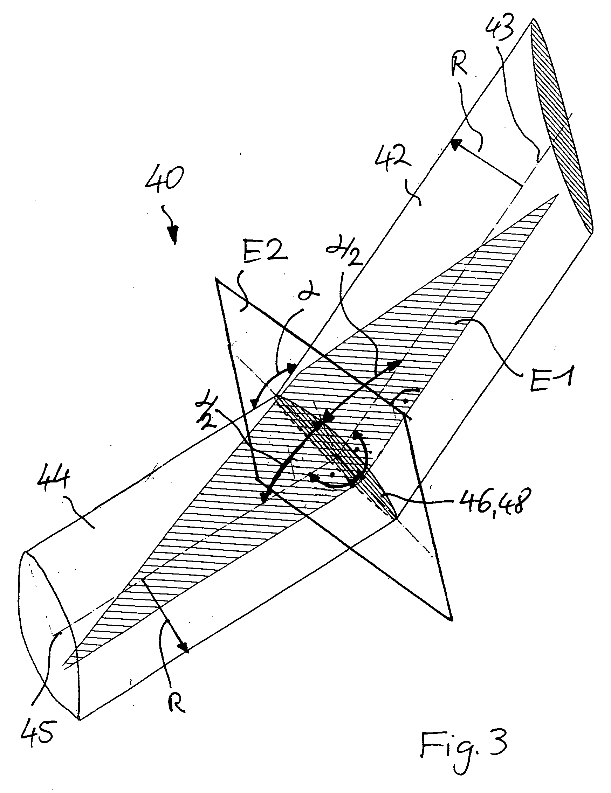

Beide Handlaufabschnitte 42, 44 weisen an ihrer Stirnseite eine ebene Schnittfläche auf, wobei die geometrischen Zusammenhänge der Schnittführung anhand der Darstellung in Figur 3 im Folgenden erläutert wird. Die beiden Längsachsen 43, 45 bilden eine (gedachte) Ebene E1. Senkrecht zur Ebene E1 ist eine Schnittebene E2 angeordnet, die durch den Schnittpunkt der beiden Längsachsen 43, 45 geht und den Winkel α zwischen den beiden Längsachsen 43, 45 halbiert. Dadurch entsteht an dem ersten Handlaufabschnitt 42 und an dem zweiten Handlaufabschnitt 44 eine erste elliptische Schnittflächengeometrie 46 und eine zweite Schnittflächengeometrie 48, die kongruent sind.

Des Weiteren sind in Figur 2 noch runde Geländerstäbe 41 dargestellt, die unterseitig jeweils in einer nicht näher dargestellten Ausnehmung des Handlaufabschnitts 42, 44 eingesteckt sind.

Die Verbindung der beiden Handlaufabschnitte 42, 44 erfolgt über eine in einer durchgehenden Stufenausnehmung 20 angeordnete Verbindungsschraube 24, die in ein Innengewinde einer Muffe 26 eingeschraubt ist, die in einer Sacklochausnehmung 22 des ersten Handlaufabschnitts 42 angeordnet ist.

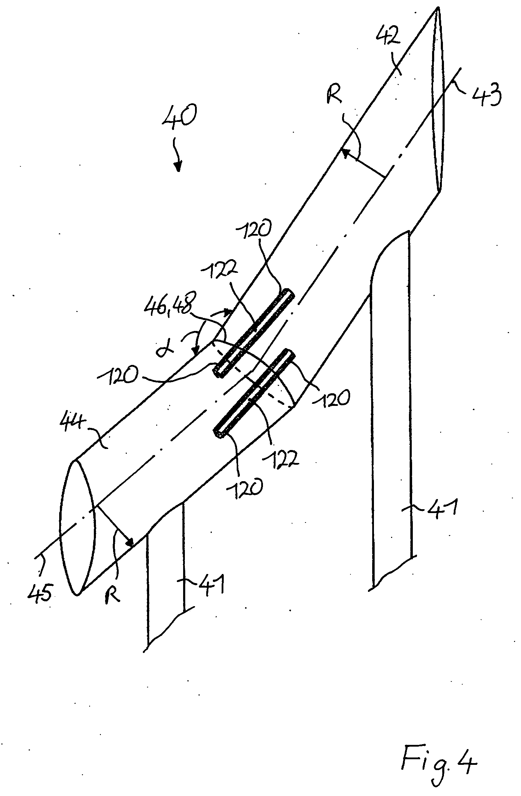

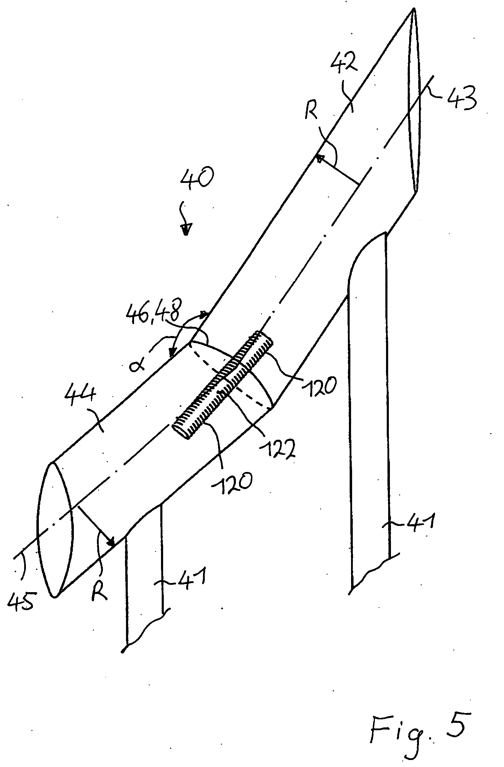

In Figur 5 ist ein Ausschnitt aus dem Treppenhandlauf 40 dargestellt, der diesselben Schnittgeometrien 46 beziehungsweise 48 aufweist wie der Treppenhandlauf 40 gemäß Figur 2. Ein Unterschied besteht darin, dass gemäß Figur 5 als Verbindungsmittel ein Dübel 122 eingesetzt wird, der in sich fluchtend an gegenüberliegenden Ausnehmungen 120 in den Schnittflächengeometrien 46 beziehungsweise 48 angeordnet ist, wobei der Dübel 120 im Schnittpunkt der Längsachsen 43, 45 der beiden Handlaufabschnitte 42, 44 vorhanden ist. Im Ausführungsbeispiel ist der Dübel 122 als Holzdübel mit Querrillen ausgebildet und in den Ausnehmungen 120 verleimt beziehungsweise verklebt. In der Ausführungsvariante gemäß Figur 4 sind zwei beabstandet angeordnete Dübel 122 in entsprechenden Ausnehmungen 120 vorhanden, die eine zusätzliche Verdrehsicherung der beiden Handlaufabschnitte 42, 44 gewährleisten.

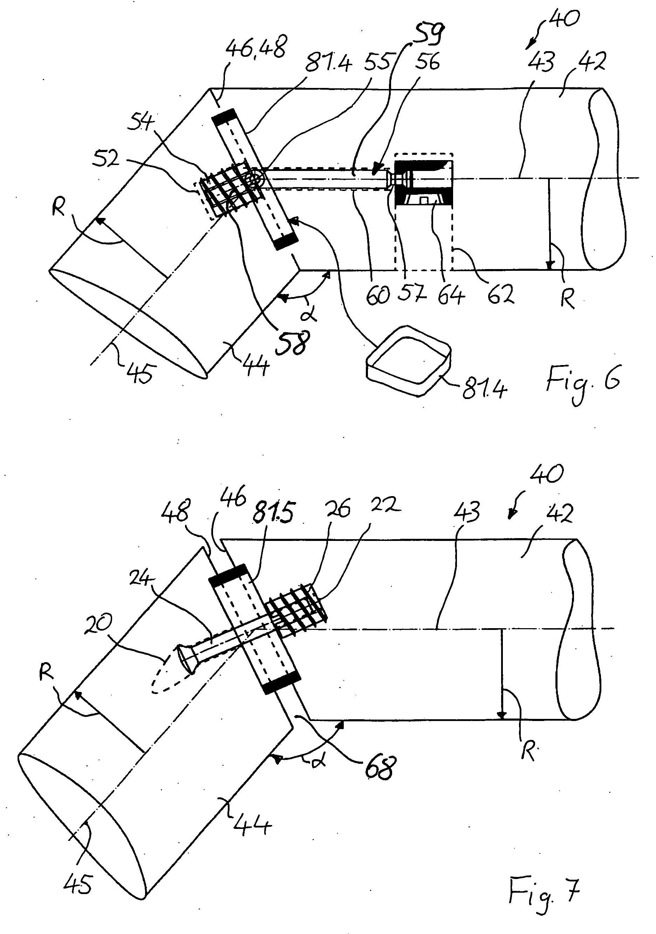

In Figur 6 ist eine Variante hinsichtlich der Verbindungstechnik des Treppenhandlaufes 40 dargestellt. Die Verbindung der beiden Handlaufabschnitte 42 und 44, die eine gemeinsame Schnittflächengeometrie 46 beziehungsweise 48 aufweisen, erfolgt über einen Gelenkdübel 56. Der Gelenkdübel 56 besitzt einen Gelenkpunkt 55, der in der Schnittachse der beiden Längsachsen 43, 45 der beiden Handlaufabschnitte 42, 44 angeordnet ist. In seinem in Figur 6 linken Bereich weist der Gelenkdübel 56 eine Schraubeinheit 58 auf, die in eine Muffe 54 mit Innengewinde eingeschraubt ist, wobei die Muffe 54 in einer entsprechenden Sacklochausnehmung 52 im zweiten Handlaufabschnitt 44 vorhanden ist. Im in Figur 6 rechten Bereich weist der Gelenkdübel 56 eine Bolzeneinheit 59 auf, die in einer Längsausnehmung 60 angeordnet ist, die in Höhe der ersten Längsachse 43 des ersten Handlaufabschnitts 42 verläuft. Im rechten Endbereich der Längsausnehmung 60 ist von unten her eine Querausnehmung 62 in den ersten Handlaufabschnitt 42 eingeformt, in der die Bolzeneinheit 59 hineinragt und in diesem hineinragenden Bereich eine Einschnürung 57 besitzt. In die Querausnehmung 62 wird eine Exzentereinheit 64 eingebracht, die zunächst die Einschnürung 57 hintergreift. Infolge Drehung der Exzentereinheit 64 wird ein Verspannen der beiden Handlaufabschnitte 42, 44 bewirkt. Ein derartiger Gelenkdübel wird bereits im Möbelbau eingesetzt, beispielsweise der Gelenkdübel DU643A der Firma Hettich.

Weiterhin ist in Figur 6 eine Formschlusseinheit 81.4 im Bereich der Schnittflächengeometrien 46, 48 vorhanden, und zwar symmetrisch zum Gelenkpunkt 55. Die Formschlusseinheit 81.4 dringt sowohl in die erste Schnittflächengeometrie 46 als auch in die zweite Schnittflächengeometrie 48 ein. Das Eindringen kann durch Einpressen erfolgen. Es ist jedoch auch möglich, dass in beiden Schnittflächengeometrien 46, 48 eine entsprechende Nut vorhanden ist. Herausgezogen ist neben Figur 6 die Formschlusseinheit 81.4 separat dargestellt. Im Ausführungsbeispiel handelt es sich um eine Ringeinheit mit quadratischer Umfangskontur und gerundeten Ecken. Die Formschlusseinheit kann auch eine andersgeartete polygonale Außenumfangskontur besitzen.

Eine weitere Ausführungsvariante des Treppenhandlaufs 40 im Verbindungsbereich der beiden Handlaufabschnitte 42, 44 ist in Figur 7 dargestellt. Das Verbinden der beiden Handlaufabschnitte 42, 44 erfolgt vom Prinzip her genau gleich wie bei der Konstruktion gemäß Figur 2, nämlich über eine in einer durchgehenden Sacklochausnehmung 23 angeordneten Verbindungsschraube 24, die in ein Innengewinde einer Muffe 26 eingreift, die in einer Sacklochausnehmung 22 des ersten Handlaufabschnitts 42 angeordnet ist. Gleichzeitig ist hier jedoch eine Formschlusseinheit 81.5 zentrisch zum Schnittpunkt der beiden Längsachsen 43, 45 angeordnet, die teilweise in die Schnittflächengeometrien 46, 48 eindringt, jedoch eine vergrößerte Querschnittshöhe hat, sodass zwischen beiden Handlaufabschnitten 42, 44 ein definierter Spalt 68 entsteht. Es ist auch möglich, die Verbindungskonstruktion ohne Spalt 68 auszuführen. Die Formschlusseinheit 81.5 besteht bevorzugt aus Messing. Im Ausführungsbeispiel gemäß Figur 7 dient die Formschlusseinheit 81.5 neben ihrer Stabilisierungsfunktion auch zum definierten Trennen der beiden Handlaufabschnitte 42, 44, wodurch gewisse Montagetoleranzen ausgeglichen werden können. Die Einheit kann in einer alternativen Ausgestaltung auch elastische Eigenschaften aufweisen und beispielsweise als Gummipuffer ausgebildet sein.

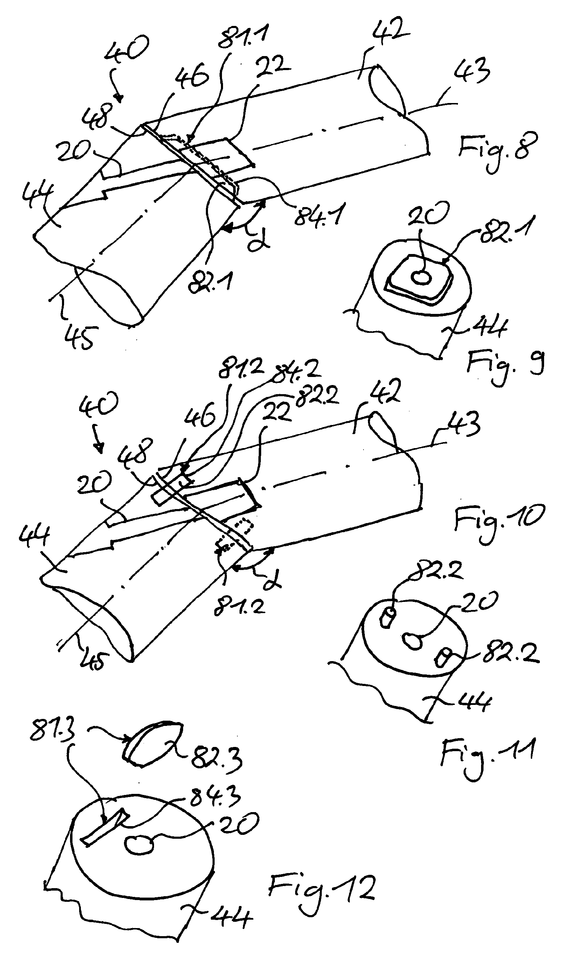

In den Figuren 8 bis 12 ist ein Ausschnitt des Treppenhandlaufes 40 im Verbindungsbereich der beiden Handlaufabschnitte 42, 44 schematisch dargestellt, wobei weitere unterschiedliche Formschlusseinheiten (81.1, 81.2, 81.3) zur Gewährleistung einer Verdrehsicherung der beiden Handlaufabschnitte 42, 44 im verbundenen Zustand eingesetzt werden.

Im Ausführungsbeispiel gemäß Figur 8 beziehungsweise 9 weist die zweite Schnittflächengeometrie 48 des zweiten Handlaufabschnitts 44 ein flaches vorspringendes umfangsmäßig quadratisches Vorsprungelement 82.1 auf, das symmetrisch und zentrisch zum Schnittpunkt der beiden Längsachsen 43, 45 an die zweite Schnittflächengeometrie 48 des zweiten Handlaufabschnitts 44 angeformt ist. Entsprechend besitzt die erste Schnittflächengeometrie 46 des ersten Handlaufabschnittes 42 eine Ausnehmung 84.1, sodass im verbundenen Zustand das Vorsprungelement 82.1 formschlüssig in der Ausnehmung 84.1 vorhanden ist.

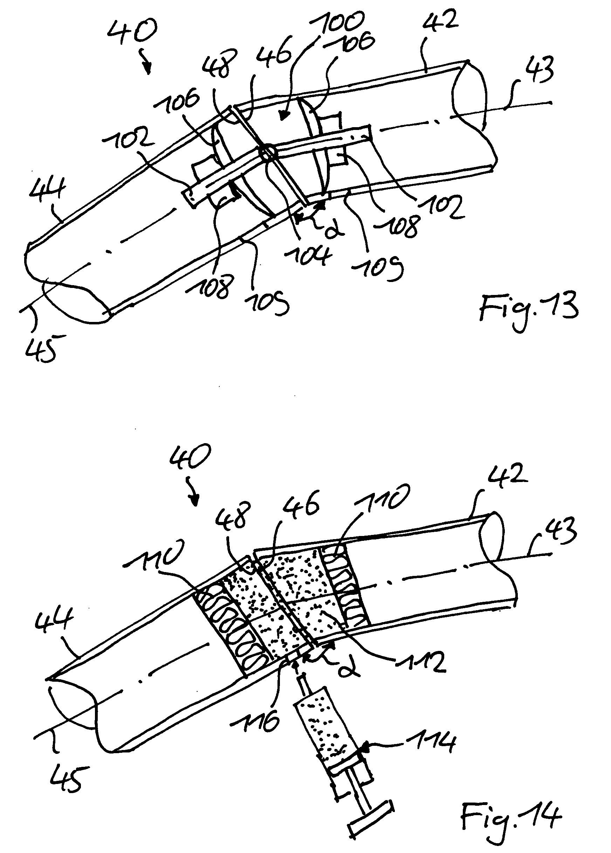

Alternativ kann gemäß dem Ausführungsbeispiel der Figuren 10 und 11 zumindest ein stiftförmiges Vorsprungelement 82.2 vorhanden sein, das in sich gegenüberliegenden entsprechend fluchtenden Ausnehmungen 84.2 der Schnittflächengeometrien 46, 48 angeordnet ist. Alternativ kann beabstandet zur Formschlusseinheit 81.2 auch im unteren Bereich eine weitere Formschlusseinheit 82.2 angeordnet sein (gestrichelte Darstellung in Figur 10).

Wie aus Figur 8 und 10 ersichtlich, ist hier die Stufenausnehmung 20 und die Sacklochausnehmung 22 in Richtung der Längsachse 43 des ersten Handlaufabschnitts 42 verlaufend angeordnet. Dies gewährleistet erhöhte Auszugsfestigkeiten bezüglich der in der Sacklochausnehmung 22 angeordneten Muffe.

In Figur 12 ist schließlich eine dritte Ausführungsvariante einer Formschlusseinheit 81.3 dargestellt, die ein plättchenförmiges Vorsprungelement 82.3 aufweist, das in den Schnittflächengeometrien 48 beziehungsweise 46 vorhandene Schlitzausnehmung 84.3 formschlüssig eingreift.

In Figur 13 ist in Seitenansicht ein Ausschnitt des Verbindungsbereiches eines Treppenhandlaufes 40 mit zwei Handlaufabschnitten 42, 44 dargestellt, dessen Schnittflächengeometrie 46, 48 der oben beschriebenen Schnittflächengeometrie des Handlaufes 40 entspricht. Die Handlaufabschnitte 42, 44 sind als Metallrohre ausgebildet. Die kreisringförmigen Schnittflächen liegen im Verbindungsbereich eben aufeinander. Die Verbindung beider Handlaufabschnitte 42, 44 erfolgt über eine im Inneren im Stirnendbereich angeordnete Gelenkeinheit 100. Die Gelenkeinheit besitzt zwei Gelenkstäbe 102, die über ein Gelenk 104 miteinander verbunden sind. Das Gelenk 104 ist im Schnittpunkt der beiden Längsachsen 43, 45 der beiden Handlaufabschnitte 42, 44 angeordnet. Die Gelenkstäbe 102 verlaufen in Richtung der Längsachsen 43, 45. Sie durchstoßen jeweils in ihrem Endbereich eine Lagereinheit 106, die sich an der Innenwandung des jeweiligen Handlaufabschnitts 42 beziehungsweise 44 abstützt und somit ein Widerlager bildet. Im über die Lagereinheit 106 hinausragenden Endbereich jedes Gelenkstabs 102 ist eine in Figur 108 stark schematisiert dargestellte Spanneinheit 108 angeordnet, die jeweils über eine Ausnehmung 109 im Rohrprofil von außen her zugänglich ist. Mittels der Spanneinheiten 108 wird eine Verspannung der Gelenkeinheit 100 und damit eine Verspannung der Handlaufabschnitte 42, 44 gewährleistet. Die Spanneinheit kann dabei unterschiedlichste konstruktive Ausformungen annehmen. Beispielsweise wäre eine Keilschraubenlösung denkbar.

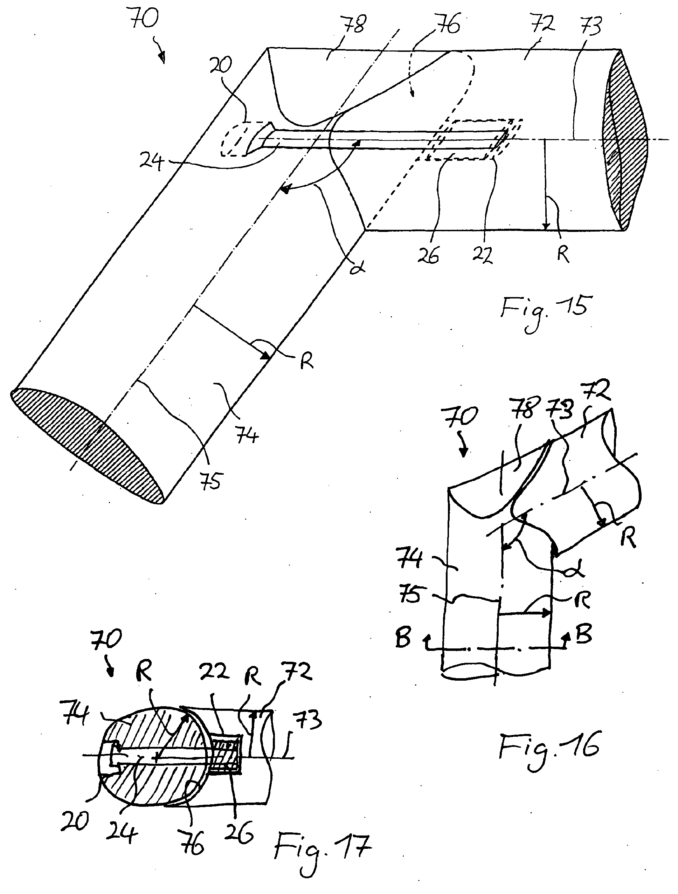

Figur 14 zeigt ebenfalls rohrförmige Handlaufabschnitte 42, 44 in einer Seitenansicht im Verbindungsbereich mit derselben Schnittflächengeometrie 46, 48 wie in Figur 13 dargestellt. Die Verbindung beider Handlaufabschnitte 42, 44 erfolgt jedoch auf andere Art und Weise. Zunächst werden in den jeweiligen Stirnendbereich beabstandet zur Stirnflächengeometrie 46, 48 in die beiden Handlaufabschnitte 42, 44 Abdichteinheiten 110 eingeschoben, die den Verbindungsbereich zum übrigen Rohrinnenvolumen hin abdichten. Über eine Bohrung 116 wird nun beispielsweise mittels einer Spritze 114 ein fließfähiges Medium in den Rohrinnenbereich zwischen den beiden beabstandeten Abdichteinheiten 110 eingespritzt, bis der Raum vollständig mit dem Medium ausgefüllt ist. Das Medium hat dabei die Eigenschaft, unter atmosphärischen Bedingungen auszuhärten und hohe Festigkeiten anzunehmen (zum Beispiel Montageschaum). Dadurch entsteht im Inneren des Verbindungsbereiches ein abgeknickter außenumfangsmäßig zylindrischer Verbindungskörper 112, der die Verbindung der beiden Handlaufabschnitte 42, 44 gewährleistet.

In den Figuren 15 bis 18 ist eine dritte Ausführungsvariante eines Treppenhandlaufs 70 mit einem ersten Handlaufabschnitt 72 und einem zweiten Handlaufabschnitt 74 im Verbindungsbereich der beiden Handlaufabschnitte 72, 74 dargestellt. Der erste Handlaufabschnitt 72 besitzt eine erste Längsachse 73 und der zweite Handlaufabschnitt 74 besitzt eine zweite Längsachse 75.

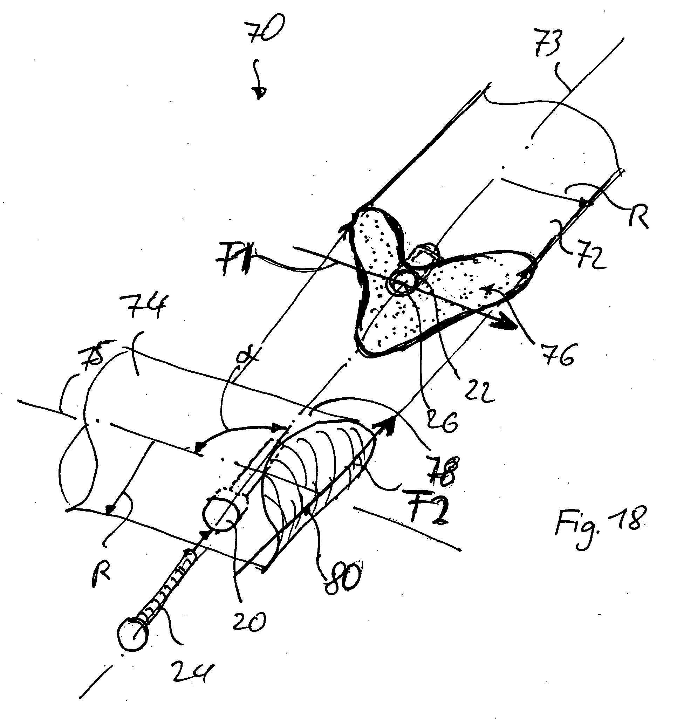

An seiner Stirnendfläche weist der erste Handlaufabschnitt 72 eine erste Schnittflächengeometrie 76 auf, die eine konkave Krümmung besitzt. Die Ausbildung der ersten Schnittflächengeometrie 76 ist abhängig von dem Winkel α zwischen den beiden Längsachsen 73, 75. Die erste Schnittflächengeometrie 76 wird beispielsweise durch Ausfräsen der Stirnseite des ersten Handlaufabschnitts 72 hergestellt, indem in Richtung des Winkels α verlaufend, parallel zur Längsachse 75 des zweiten Handlaufabschnitts 74 eine teilkreisförmige Ausnehmung mit Radius R hergestellt wird (Pfeilrichtung F1 in Fig. 18). Da der Verlauf der ersten Schnittflächengeometrie 76 entsprechend der Außenkontur des zweiten Handlaufabschnitts 74 parallel zur Richtung der zweiten Längsachse 75 ausgerichtet ist, bildet die Außenkontur des zweiten Handlaufabschnitts 74 quasi die zweite Schnittflächengeometrie 78, an der die erste Schnittflächengeometrie 76 des ersten Handlaufabschnitts 72 im Verbindungszustand vollständig anliegt.

Die freie Stirnendseite des zweiten Handlaufs 74 besitzt eine Rundungskontur 80, die eine konvexe Krümmung besitzt. Die Krümmung der Rundungskontur 80 entspricht der Krümmung der Außenkontur des zweiten Handlaufabschnitts 74, das heißt sie ist teilkreisförmig mit Radius R ausgebildet. Die Schnittführung zur Bildung der Rundungskontur 80 verläuft parallel zur ersten Längsachse 73 des ersten Handlaufabschnitts 72 (Pfeilrichtung F2 in Fig. 18), sodass im Verbindungszustand beide Handlaufabschnitte 72, 74 ein glatter Übergang zwischen der Rundungskontur 80 des zweiten Handlaufabschnitts 74 und der Außenkontur des ersten Handlaufabschnitts 72 gegeben ist.

Das Verspannen der beiden Handlaufabschnitte 72, 74 erfolgt in dem dargestellten Ausführungsbeispiel gemäß Figur 8, 10, 11 über eine Verbindungsschraube 24, die in einer durchgehenden Stufenausnehmung 20 des zweiten Handlaufabschnitts 74 angeordnet ist, wobei die Stufenausnehmung 20 in Richtung der ersten Längsachse 73 des ersten Handlaufabschnitts 72 verläuft. Der erste Handlaufabschnitt 72 besitzt eine zur erste Schnittflächengeometrie 76 hin offene Sacklochausnehmung 22, die in Richtung der ersten Längsachse 73 angeordnet ist und in der eine Muffe 26 mit Innengewinde vorhanden ist, wobei die Verbindungsschraube 24 im verbundenen Zustand der beiden Handlaufabschnitte 72, 74 in dem Innengewinde der Muffe 26 kämmt.

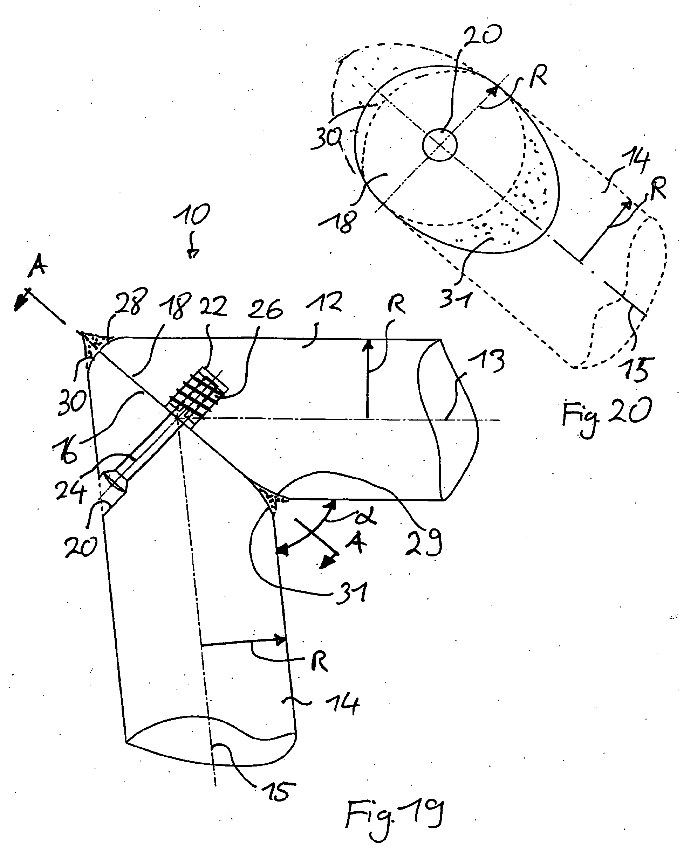

In den Figuren 19 und 20 ist ein Ausschnitt eines Treppenhandlaufes 10 im Verbindungsbereich eines ersten Handlaufabschnitts 12 mit einem zweiten Handlaufabschnitt 14 gemäß einer dritten konstruktiven Ausführungsvariante dargestellt. Beide Handlaufabschnitte 12, 14 sind als Rundholzquerschnitte mit einem Radius R ausgebildet mit einer ersten Längsachse 13 beziehungsweise einer zweiten Längsachse 15.

Der Winkel α, unter dem die beiden Handlaufabschnitte 12, 14 aufeinanderstoßen, ist im Ausführungsbeispiel ca. 84° (Altgrad). Beide Stirnflächen der Handlaufabschnitte 12, 14 weisen eine ebene Schnittfläche auf, die senkrecht auf der durch die beiden Längsachsen 13, 15 gebildeten Ebene steht und den Winkel α jeweils halbiert. Dadurch entsteht eine erste ebene Schnittflächengeometrie 16 am ersten Handlaufabschnitt 12 und eine zweite ebene Schnittflächengeometrie 18 am zweiten Handlaufabschnitt 14.

Gemäß der geneigten Schnittführung entsteht zunächst eine über eine Kreisfläche mit dem Radius R elliptisch hinausragende Schnittflächengeometrie (schraffierter Bereich in Figur 20). In einem zweiten Arbeitsgang werden die über die Kreisfläche hinausragenden elliptischen Bereiche vom Rand her bearbeitet, sodass am ersten Handlaufabschnitt 12 eine erste Rundungskontur 28 im äußeren Eckbereich und eine zweite Rundungskontur 29 im inneren Eckbereich entsteht. Ebenso entsteht durch die Nachbearbeitung im äußeren Eckbereich des zweiten Handlaufabschnitts 14 eine dritte Rundungskontur 30
und im inneren Eckbereich eine vierte Rundungskontur 31. Dadurch ist im Ergebnis die erste Schnittflächengeometrie 16 und die zweite Schnittflächengeometrie 18 kreisförmig. Beide Schnittflächengeometrien 16, 18 liegen im Verbindungszustand kongruent aneinander. Dadurch ist es möglich, unterschiedliche Raumwinkel α einzustellen, ohne dass im Verbindungsbereich scharfe Ecken und Kanten entstehen.

Der zweite Handlaufabschnitt 15 besitzt eine von außen zugängliche Stufenausnehmung 20, die senkrecht auf der zweiten Schnittflächengeometrie 18 angeordnet ist und durch den Schnittpunkt der beiden Längsachsen 13, 15 geht. Gleichzeitig ist am ersten Handlaufabschnitt 12 eine senkrecht zur ersten Schnittflächengeometrie 16 angeordnete Sacklochausnehmung 22 vorhanden, die ebenfalls mittig zum Schnittpunkt der beiden Längsachsen 13, 15 angeordnet ist. Innerhalb der Sacklochausnehmung 22 ist eine Muffe 26 mit Innengewinde angeordnet. Zum Verbinden der beiden Handlaufabschnitte 12, 14 wird nun durch die Stufenausnehmung 20 von außen her eine Verbindungsschraube 24 eingebracht und in das Innengewinde der Muffe 26 verschraubt. Dadurch verspannen sich die beiden kreisförmigen Schnittflächengeometrien 16 und 18, sodass eine dauerhaft zuverlässige Verbindung vorliegt, die sehr einfach hergestellt werden kann.

Die Herstellung der oben beschriebenen Schnittflächengeometrien ist problemlos im Rahmen einer computergestützten Fertigung möglich. Die Aufmaße der Treppe werden in dem Bauwerk exakt gemessen. Mit diesen Aufmaßen wird die räumliche Geometrie der Treppe und damit auch der einzelnen Treppenhandlaufabschnitte berechnet und dabei insbesondere der jeweilige Raumwinkel zwischen benachbarten Handlaufabschnitten und die zugeordneten Ebenen bestimmt. Mit diesen Werten kann dann die jeweilige Stirnflächengeometrie eben (gemäß dem Ausführungsbeispiel nach Figur 3) oder gekrümmt (gemäß dem Ausführungsbeispiel gemäß Figur 8) unter Einsatz computergesteuerter Fertigungsvorrichtungen erzeugt werden. Die Schnittflächengeometrien werden somit im Werk hinsichtlich der jeweiligen räumlichen Situation gefertigt zusammen mit den zugehörigen Ausnehmungen für die Verbindungsmittel. Dadurch gestaltet sich die Montage als äußerst einfach und zeitsparend.

## Patentansprüche

1. Räumlich verlaufender Treppenhandlauf (10; 40; 70) mit mehreren geraden unter einem jeweiligen Raumwinkel (α1, α2,α3) aneinanderstoßenden Handlauf abschnitten, die eine konvex gekrümmte, insbesondere kreisförmige Umfangskontur aufweisen, wobei
- zumindest ein erster Handlaufabschnitt (12; 42; 72) mit einer ersten Längsachse (13; 43; 73) vorhanden ist und
- zumindest ein an den ersten Handlaufabschnitt (12; 42; 72) in dem entsprechenden Raumwinkel (α2) angeschlossener zweiter Handlaufabschnitt (14; 44; 74) mit einer zweiten Längsachse (15; 45; 75) vorhanden ist, und
- mit Mitteln zum Verbinden der Handlaufabschnitte (12, 42, 72; 14, 44, 74),
**dadurch gekennzeichnet, dass**
- die Stirnendseiten aneinanderstoßender Handlaufabschnitte (12, 42, 72; 14, 44, 74) in ihrer jeweiligen räumlichen Lage direkt ohne Einsatz zusätzlicher Anschlusseinheiten, das heißt einteilig, kongruent aneinanderliegend miteinander verbunden sind, sodass sich ein räumlich durchgehender Treppenhandlauf ohne Versätze oder Überstände im Anschlussbereich der Handlaufabschnitte (12, 42, 72; 14, 44, 74) ergibt,
-- wobei die jeweils gegenüberliegenden Stirnendflächen zweier Handlaufabschnitte (12, 42; 14, 44) eine ebene, quer zur ersten beziehungsweise zweiten Längsachse (13, 43; 15, 45) des ersten beziehungsweise zweiten Handlaufabschnitts (12, 42; 14, 44) vorhandene Schnittflächengeometrie (16, 18; 46, 48) aufweisen, derart, dass im verbundenen Zustand die Stirnendflächen beider Handlaufabschnitte (12, 42; 14, 44) unter Beibehaltung des jeweiligen Raumwinkels (α) flächig aufeinanderliegen, oder
-- wobei zumindest eine Stirnendfläche eines der beiden Handlaufabschnitte (72) eine konkav gekrümmte Schnittflächengeometrie (76) aufweist, derart, dass die Stirnendfläche des einen Handlaufabschnitts (72) bereichsweise an der konvexen Außenkontur (78) des anderen Handlaufabschnitts (74) unter Beibehaltung des jeweiligen Raumwinkels (α) im verbundenen Zustand anliegt.

2. Treppenhandlauf (10) nach Anspruch 1,
**dadurch gekennzeichnet, dass**
die Schnittflächengeometrie (16, 18) des Stirnendes des ersten und zweiten Handlaufabschnitts (12, 14) durch eine Schnittführung im Bereich zwischen 40° und 50° (Altgrad) zur Längsachse (13, 15) des jeweiligen Handlaufabschnitts (12, 14) hergestellt ist und die durch die Schnittführung erzeugte zunächst elliptische Schnittfläche durch Abrundungen (28, 29; 30, 31) im Bereich der gegenüberliegenden langen Ellipsenseite zu einer kreisförmigen Schnittfläche geformt ist, sodass im verbundenen Zustand kongruente kreisförmige Schnittflächengeometrien (16, 18) der Stirnseiten aneinanderliegen.

3. Treppenhandlauf (40) nach Anspruch 1,
**dadurch gekennzeichnet, dass**
die Schnittflächengeometrie (46, 48) des Stirnendes des ersten und zweiten Handlaufabschnitts (42, 44) durch eine ebene Schnittführung in einer Ebene (E2) hergestellt ist, die senkrecht auf einer durch die erste und zweite Längsachse (43, 45) gebildeten Ebene (E1) steht und den jeweiligen Raumwinkel (α) halbiert, sodass im verbundenen Zustand kongruente Schnittflächengeometrien (46, 48) aneinanderliegen.

4. Treppenhandlauf (70) nach Anspruch 1,
**dadurch gekennzeichnet, dass**
die konkav gekrümmte Schnittflächengeometrie (76) der Stirnseite des ersten Handlaufabschnitts (72) durch eine parallel zur Längsachse (75) des zweiten Handlaufabschnitts (74) geführte Ausnehmung mit Teilkreisquerschnitt gebildet wird, die im verbundenen Zustand flächig an der gegenüberliegenden zweiten Flächengeometrie (78), das heißt der Außenkontur, des zweiten Handlaufabschnitts (74) anliegt.

5. Treppenhandlauf nach Anspruch 4,
**dadurch gekennzeichnet, dass**
die Stirnseiten des zweiten Handlaufabschnitts (74) eine konvexe parallel zur Längsachse (73) des ersten Handlaufabschnitts (72) geführte Rundungskontur (80) mit Teilkreisquerschnitt besitzt, die der teilweisen Außenkontur des ersten Handlaufabschnitts (72) entspricht, sodass im Verbindungszustand ein nahtloser Übergang zwischen der Außenkontur des ersten Handlaufabschnitts (72) und der Rundungskontur (80) des zweiten Handlaufabschnitts (74) vorhanden ist.

6. Treppenhandlauf nach einem oder mehreren der vorstehenden Ansprüche,
**dadurch gekennzeichnet, dass**
der erste und/oder der zweite Handlaufabschnitt (14, 44, 74) eine von außen zugängliche Ausnehmung, insbesondere Stufenausnehmung (20) besitzt, die bis zur Schnittflächengeometrie (18, 48, 78) durchgeht und in der ein Verbindungsmittel, insbesondere Schraube (24), zum Verbinden mit dem jeweiligen anzuschließenden Handlaufabschnitt (12, 42, 72) angeordnet ist.

7. Treppenhandlauf nach Anspruch 6,
**dadurch gekennzeichnet, dass**
in Verlängerung der Ausnehmung (20) der anzuschließende Handlaufabschnitt (12, 42, 72) eine Sacklochbohrung (22) mit einer Muffe (26) aufweist.

8. Treppenhandlauf nach Anspruch 6 oder 7,
**dadurch gekennzeichnet, dass**
die durchgehende Ausnehmung (20) beziehungsweise Sacklochausnehmung (22) im Wesentlichen senkrecht und mittig zur jeweiligen Schnittflächengeometrie (16, 18; 46, 48) angeordnet ist.

9. Treppenhandlauf nach Anspruch 6 oder 7,
**dadurch gekennzeichnet, dass**
die Ausnehmung (20) beziehungsweise Sacklochausnehmung (22) in Richtung der Längsachse (43, 73) eines anzuschließenden Handlaufabschnitts (42, 72) verläuft.

10. Treppenhandlauf nach Anspruch 1, 2, 3, 6 oder 8,
**dadurch gekennzeichnet, dass**
an beiden Schnittflächengeometrien (16, 18; 46, 48) im verbundenen Zustand eine Formschlusseinheit (81) vorhanden ist, die eine Verdrehung der Handlaufabschnitte (12, 14) verhindert.

11. Treppenhandlauf nach Anspruch 10,
**dadurch gekennzeichnet, dass**
die Formschlusseinheit (81) in die Schnittflächengeometrien (16, 18; 46, 48) eingepresst oder in einer entsprechenden Nut/Ausnehmung verlaufend/angeordnet vorhanden ist.

12. Treppenhandlauf nach Anspruch 10 oder 11,
**dadurch gekennzeichnet, dass**
die Formschlusseinheit (81) aus hochfestem Material, insbesondere Metall, besteht.

13. Treppenhandlauf nach einem der Ansprüche 10 bis 12,
**dadurch gekennzeichnet, dass** zwischen beiden Schnittflächengeometrien (46, 48) im verbundenen Zustand ein Spalt (68) vorhanden ist und die Formschlusseinheit (81.5) auch als Distanzeinheit dient.

14. Treppenhandlauf nach Anspruch 13,
**dadurch gekennzeichnet, dass**
die Formschlusseinheit (81.5) elastische Eigenschaften besitzt.

15. Treppenhandlauf nach einem oder mehreren der Ansprüche 10 bis 14,
**dadurch gekennzeichnet, dass**
die Formschlusseinheit (81.4) als polygonale, insbesondere quadratische Ringeinheit, oder runde Ringeinheit ausgebildet ist.

16. Treppenhandlauf nach Anspruch 15,
**dadurch gekennzeichnet, dass**
die Höhe der Ringeinheit im Bereich von 3 bis 5 mm (Millimeter) liegt.

17. Treppenhandlauf nach einem oder mehreren der Ansprüche 10 bis 14,
**dadurch gekennzeichnet, dass**
die Formschlusseinheit (81.1, 81.2, 81.3) zumindest ein Vorsprungelement (82.1, 82.2, 82.3) aufweist, das in einer entsprechenden Ausnehmung (84.1, 84.2, 84.3) formschlüssig angeordnet ist.

18. Treppenhandlauf nach einem oder mehreren der vorstehenden Ansprüche,
**dadurch gekennzeichnet, dass**
die Verbindung beider Handlaufabschnitte (42, 44) über einen Gelenkdübel (56) erfolgt, dessen Gelenkpunkt (55) im Schnittpunkt der Längsachsen (43, 45) beider Handlaufabschnitte (42, 44) angeordnet ist, der Gelenkdübel (56) mit dem zweiten Handlaufabschnitt (44) über eine in einer Sacklochausnehmung (52) angeordnete Muffe (54) verbunden ist, der Gelenkdübel (56) weiterhin in einer in der Längsachse (43) des ersten Handlaufabschnitts (42) verlaufenden Längsausnehmung (60) angeordnet ist, wobei die Längsausnehmung (60) von einer Querausnehmung (62) durchbrochen wird und in der Querausnehmung (62) eine betätigbare Spanneinheit, insbesondere Exzentereinheit (64), angeordnet ist, mittels derer der Gelenkdübel (56) verspannbar ist, wodurch die Verbindung der beiden Handlaufabschnitte (42, 44) herstellbar ist.

19. Treppenhandlauf nach einem oder mehreren der vorstehenden Ansprüche,
**dadurch gekennzeichnet, dass**
der erste und zweite Handlaufabschnitt (12, 14; 42, 44; 72, 74) als Rundholzvollprofile ausgebildet sind.

20. Treppenhandlauf nach einem oder mehreren der Ansprüche 1 bis 5, 10 bis 19,
**dadurch gekennzeichnet, dass**
in beiden Stirnendbereichen der aneinanderstoßenden Handlaufabschnitte (12, 14) jeweils zumindest eine gegenüberliegende fluchtende Ausnehmung (120) vorhanden ist und in beiden Ausnehmungen (120) ein insbesondere eingeklebter oder eingeleimter Dübel (122) eingesetzt ist.

21. Treppenhandlauf nach Anspruch 20,
**dadurch gekennzeichnet, dass**
der Dübel (122) Querrillen aufweist.

22. Treppenhandlauf nach Anspruch 20 oder 21,
**dadurch gekennzeichnet, dass**
zwei beabstandet zueinander angeordnete Dübel (122) in entsprechenden Ausnehmungen (120) vorhanden sind.

23. Treppenhandlauf nach Anspruch 1 und 3,
**dadurch gekennzeichnet, dass**
die Handlaufabschnitte (12, 14) als Rohrprofile, insbesondere aus Metall, ausgebildet sind und im Anschlussstirnbereich zweier Handlaufabschnitte (12, 14) im Rohrinneren eine Verbindereinrichtung mit folgendem Aufbau angeordnet ist:
- eine Gelenkeinheit (100) mit zwei über ein Gelenk (104) verbundenen Gelenkstäben (102), wobei das Gelenk (104) im verbundenen Zustand der Handlaufabschnitte (12, 14) im Schnittpunkt der beiden Längsachsen (13, 15) und die Gelenkstäbe (102) in Richtung der Längsachsen (13, 15) angeordnet sind,
- in beiden Handlaufabschnitten (12, 14) im Inneren des Rohrprofils beabstandet zur Schnittflächengeometrie Lagereinheiten (106) vorhanden sind, die im Rohrinneren festlegbar sind und an denen jeweils ein Gelenkstab (102) mittels jeweils einer von außen zugänglichen Spanneinheit (108) verspannbar ist.

24. Treppenhandlauf nach Anspruch 1 und 3,
**dadurch gekennzeichnet, dass**
die Handlaufabschnitte (12, 14) als Rohrprofile, insbesondere aus Metall, ausgebildet sind und im Anschlussbereich zweier Handlaufabschnitte (12, 14) im Rohrinneren eine Verbindereinrichtung mit folgendem Aufbau angeordnet ist:
- in beiden Handlaufabschnitten (12, 14) sind im Inneren Abdichteinheiten (110) vorhanden, die beabstandet zu der jeweiligen Schnittflächengeometrie (16, 18) angeordnet sind, und
- einem von außen in den Raum zwischen beiden Abdichteinheiten (110) eingebrachten Fließmedium, das den Raum ausfüllt und unter atmosphärischen Bedingungen zu einem festen Verbindungskörper (112) erstarrt ist.

25. Treppenhandlauf nach einem oder mehreren der vorstehenden Ansprüche,
**dadurch gekennzeichnet, dass**
der Außendurchmesser der Handlaufabschnitte (12, 14; 42, 44; 72, 74) im Bereich von 4 bis 8 cm (Zentimeter) liegt.

26. Treppenhandlauf nach einem oder mehreren der vorstehenden Ansprüche,
**dadurch gekennzeichnet, dass**
die Handlaufabschnitte unterseitig Ausnehmungen zum Anschluss von Geländerstäben aufweisen.

27. Treppe mit beliebigem Treppenverlauf, insbesondere polygonalem, L-, U- oder spindelförmigem Verlauf, mit Trittstufen, einem Geländer mit Geländerstäben und einem Treppenhandlauf, wobei die Geländerstäbe an den Trittstufen oder an einer Treppenwange und den Treppenhandlauf angeschlossen sind,
**dadurch gekennzeichnet, dass**
ein Treppenhandlauf nach einem oder mehreren der vorstehenden Ansprüche vorhanden ist.
